# EUROPÄISCHE PATENTSCHRIFT

(11) **EP 1 282 543 B1**
(45) Veröffentlichungstag und Bekanntmachung des Hinweises auf die Patenterteilung: **01.06.2005**
(21) Anmeldenummer: 01931427.7
(22) Anmeldetag: 11.04.2001
(51) Int. Cl.: B60S 1/38

(54) **WISCHLEISTE FÜR SCHEIBENWISCHER**
WIPER STRIP FOR WINDSCREEN WIPERS
BALAIS D'ESSUIE-GLACE

(30) Priorität: 10.05.2000 DE 10022724
(43) Veröffentlichungstag der Anmeldung: 12.02.2003
(73) Patentinhaber: ROBERT BOSCH GMBH, 70442 Stuttgart (DE)
(72) Erfinder: LEUTSCH, Wolfgang, 77830 Buehlertal (DE)
(86) Internationale Anmeldenummer: PCT/DE2001/001418
(87) Internationale Veröffentlichungsnummer: WO 2001/085503

(56) Entgegenhaltungen:
- EP-A- 0 744 326
- WO-A-00/05111
- DE-A- 19 524 108
- FR-A- 2 628 046
- US-A- 2 782 444
- US-A- 3 428 997
- PATENT ABSTRACTS OF JAPAN vol. 010, no. 299 (M-524), 11. Oktober 1986 (1986-10-11) & JP 61 110652 A (NIPPON DENSO CO LTD), 28. Mai 1986 (1986-05-28)

## Beschreibung

### Stand der Technik

Die Erfindung geht von einer Wischleiste für Scheibenwischer nach dem Oberbegriff des Anspruchs 1 aus.

Bekannte Scheibenwischer besitzen einen Wischarm, der aus einem Befestigungsteil und einem über ein Abklappgelenk daran angelenkten Gelenkteil mit einer Wischstange aufgebaut ist. In der Regel greift ein hakenförmiges Ende der Wischstange in einen Einhängekasten eines Wischblatts, der von zwei Seitenwangen eines Mittelbügels gebildet wird, und umfasst einen Gelenkbolzen. Das so gebildete Gelenk führt das Wischblatt während der Schwenkbewegung über die Fahrzeugscheibe.

Das Wischblatt besteht aus einem mehrgliederigen Tragbügelsystem mit an dem Mittelbügel angelenkten, untergeordneten Bügeln, von denen zumindest einige mit Krallen an ihren Enden eine Wischleiste halten. Die lang gestreckte Wischleiste besteht aus Gummi und weist ein Profil mit zwei Hauptabschnitten auf, einem Profilrücken und einem Funktionsteil. Am Profilrücken ist die Wischleiste mit dem Tragbügelsystem verbunden und zwar indem die Krallen der Krallenbügel in einander gegenüberliegende Längsnuten des Profilrückens eingreifen. Dabei umfassen die Krallen einen Teil des Profilrückens, der mindestens eine weitere Längsnut aufweist, in der eine Federschiene gelagert ist. Werden zwei Federschienen verwendet, so liegen diese symmetrisch angeordnet in einander gegenüberliegenden Längsnuten. Es sind auch Wischleisten bekannt, bei denen eine Federschiene in einem mittigen Längskanal des Profilrückens vorgesehen ist. Während des Betriebs sollen die Federschienen eine auf das Wischblatt gerichtete Anlagekraft über die gesamte Länge der Wischleiste gleichmäßig verteilen und diese gleichzeitig versteifen.

Über einen dünnen Steg ist der Profilrücken mit dem Funktionsteil der Wischleiste verbunden, der aus einem Wischkeil und einer Wischlippe besteht. Der Wischkeil weist im Querschnitt die Form eines annähernd gleichschenkligen Dreiecks auf, dessen Basisseite zum Verbindungssteg weist, während an der Spitze die Wischlippe angeformt ist. Beim Wischen wird das Wischblatt in Richtung zur Fahrzeugscheibe hin durch die Anlagekraft belastet, wobei die Wischlippe an der Fahrzeugscheibe anliegt. Zudem wirkt eine durch die Schwenkbewegung erzeugte Kraft seitlich auf das Gummiprofil. Während der Profilrücken durch die Seitenkraft bewegt wird, bleibt die Wischlippe zunächst in ihrer Stellung. Dabei wirkt der dünne Steg zwischen dem Profilrücken und dem Funktionsteil wegen seiner hohen elastischen Verformbarkeit als Kippgelenk, so dass die Wischlippe am Funktionsteil etwa einen Anstellwinkel von 45° zur Glasoberfläche einnimmt. Diese Schlepplage ist die Arbeitsstellung der Wischlippe. Der Wischkeil ist in dieser Lage so weit umkippt, bis er mit seiner äußeren oberen Schulter an der Unterseite des Profilrückens anliegt.

Infolge der oszillierenden Wischbewegung der Scheibenwischer ergeben sich Umkehrpunkte in den Endlagen der Bewegung. Hier klappt der Wischkeil in die entgegengesetzte Richtung um und nimmt anschließend wieder eine geschleppte Arbeitslage ein. Durch diesen Umklappvorgang entsteht bei herkömmlichen Scheibenwischern ein störendes Geräusch. Zudem wird der Wischgummi im Bereich des Kippstegs sehr stark elastisch verformt. Dies führt im Verlaufe der Einsatzzeit zu einer permanenten Verformung des Wischgummiprofils, welches zuerst nur die Wischfunktion des Scheibenwischers beeinträchtigt und später sogar das Umklappen verhindert.

Aus der DE 91 04 461.8 U1 ist eine Wischleiste bekannt, bei der zwischen dem Profilrücken und der anschlagenden Schulter des Wischkeils eine Dämpfungsleiste vorgesehen ist. Wenn der Funktionsteil der Wischleiste im Umkehrpunkt umklappt, schlägt die Schulter zunächst gegen die Dämpfungsleiste und drückt diese bis zur Anlage an den Profilrücken. Dadurch wird die Aufschlaggeschwindigkeit gebremst und das Geräusch beim Umklappen gedämpft. Ein spitzer Winkel α zwischen der Dämpfungsleiste und dem Profilrücken, dessen Spitze zum Kippsteg weist, bewirkt zudem, dass sich mit zunehmender Verformung der Dämpfungsleiste der Dämpfungswiderstand vergrößert. Durch die Dämpfungsleiste darf der Anstellwinkel der Wischlippe zur Fahrzeugscheibe nicht vermindert werden, so dass die Wechselbiegebelastung des Kippstegs unverändert ist.

EP-A-744 326 offenbart den Oberbegriff des Anspruchs 1.

### Vorteile der Erfindung

Nach der Erfindung umfasst der Funktionsteil einer Wischleiste einen Stützabschnitt, der mit dem Profilrücken über einen ersten Kippsteg und mit dem Wischkeil über einen zweiten Kippsteg verbunden ist. Der Stützabschnitt weist im Querschnitt die Form eines gleichschenkligen Trapezes auf, dessen Basisseite zum ersten Kippsteg weist. Somit folgt der Stützabschnitt einer grundlegenden Formgebung des Funktionsteils, welches seine größte Breite auf der Seite zum ersten Kippsteg besitzt und zum freien Ende der Wischlippe hin kontinuierlich abnimmt.

Während des Betriebs kippt der Funktionsteil in einem ersten Vorgang so weit zur Seite, bis eine obere Schulter des Stützabschnitts an der Unterseite des Profilrückens anliegt. Die Wischlippe ist jetzt nur um einen ersten Teilkippwinkel geneigt. Im weiteren Verlauf der Bewegung kippt dann der Wischkeil zur Seite bis dessen obere Schulter an der Unterseite des Stützbereichs anliegt. Erst jetzt weist die Wischlippe einen benötigten Kippwinkel von etwa 45°gegenüber der Fahrzeugscheibe auf. Erfindungsgemäß wird die Arbeitsstellung der Wischlippe in zwei Vorgängen mit zeitlichem Versatz eingestellt. Der Vorteil dieses Ablaufs ist ein gedämpftes Umklappen des Funktionsteils der Wischleiste an den Umlenkpunkten der Schwenkbewegung verbunden mit einem stark reduzierten Umklappgeräusch.

Zudem besteht ein weiterer Vorteil dieser Profilgestaltung darin, dass ein optimales Verhältnis zwischen geometrischem Umklappen und elastischer Verformung besteht, indem sich der gesamte Kippwinkel auf die zwei Kippstege aufteilt und somit die damit verbundene Verformung des Funktionsabschnitts auf die zwei Kippstege verteilt ist, so dass jeder Kippsteg nur mit einem Teil der Wechselbiegebeanspruchung belastet ist. Lokale Spannungsüberhöhungen, welche bei herkömmlichen Wischleisten mit nur einem Kippsteg auftreten, kommen hier nicht vor. Ferner reduzieren Hinterschnitte, welche den Freiraum zwischen der unteren Kante des Profilrückens und der Basisfläche des trapezförmigen Stützabschnitts zum Kippsteg hin in der Höhe erweitern, die elastische Verformbarkeit des ersten Kippstegs. Weitere Hinterschnitte sind nach der Erfindung auch an den Freiräumen zwischen dem Stützabschnitt und dem Wischkeil vorgesehen. Durch die Gestaltung der Freiräume und Hinterschnitte kann das Kippverhalten der Kippstege aufeinander abgestimmt werden, vorzugsweise so, dass zunächst der erste Kippsteg vermehrt an der Kippbewegung beteiligt ist, während die Kippbewegung des zweiten Kippstegs größten Teils erst stattfindet, wenn der Stützabschnitt bereits am Profilrücken anliegt.

Eine reduzierte elastische Verformung begünstigt die Lebensdauer des Wischgummis und verhindert, dass eine im Verlauf der Einsatzzeit durch hohe elastische Verformung hervorgerufene permanente Verformung des Wischprofils auftritt. Die Ausgestaltung des Profilrückens bleibt von der erfindungsgemäßen Gestaltung des Funktionsabschnitts im Wesentlichen unberührt, so dass derartige Wischgummiprofile in Wischblättern mit den unterschiedlichsten Krallenformen und auch in so genannten gelenklosen Wischblättern eingesetzt werden können.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.
Der Fachmann wird die Merkmale zweckmäßigerweise auch einzeln betrachten und zu sinnvollen weiteren Kombinationen zusammenfassen.

Es zeigen:
- Fig. 1: ein Wischblatt mit Tragbügelsystem in der Seitenansicht,
- Fig. 2: eine vergrößerte Schnittdarstellung entsprechend der Linie II-II in Fig. 1,
- Fig. 3: eine vergrößerte Darstellung eines Wischgummiprofils in teilweise umgeklappter Stellung,
- Fig. 4: eine vergrößerte Darstellung eines Wischgummiprofils in Arbeitsstellung,
- Fig. 5: ein gelenkloses Wischblatt und
- Fig. 6: einen Schnitt entsprechend der Linie VI-VI in Fig. 5.

### Beschreibung der Ausführungsbeispiele

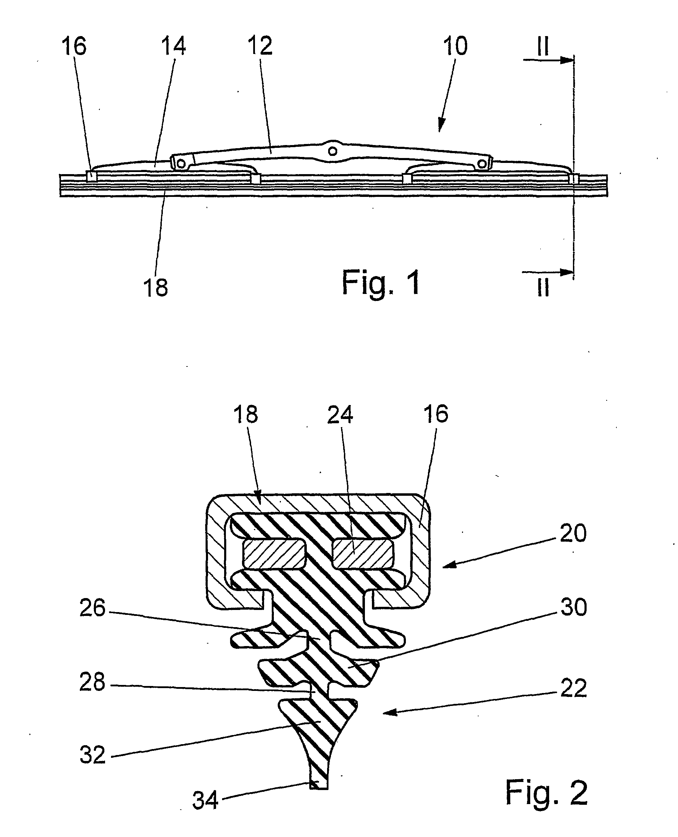

Ein Wischblatt 10 besteht aus einem Mittelbügel 12, an dessen Enden untergeordnete Krallenbügel 14 mit Krallen 16 zur Aufnahme einer Wischleiste 18 angelenkt sind (Fig. 1). Die Wischleiste 18 ist lang gestreckt und wird in einem Haltebereich an mehreren Stellen von den Krallen 16 umfasst.

Fig. 2 zeigt eine Schnittdarstellung durch eine Kralle 16 im vergrößerten Maßstab. Die Kralle 16 umfasst den Haltebereich der Wischleiste 18, einen so genannten Profilrücken 20, welcher vorzugsweise eine Gesamtbreite von 6 bis 10 mm und eine Gesamthöhe von 3,5 bis 7 mm aufweist. Zudem ist der Profilrücken 20 durch zwei Federschienen 24 als versteifende Elemente verstärkt. Wird nur eine Federschiene 24 verwendet, so ist diese in der Regel mittig angeordnet. Je nach Fahrzeugtyp variiert die Dicke einer Federschiene 24 zwischen 0,7 und 1,2 mm und die Breite zwischen 2,5 und 4,5 mm.

Der Profilrücken 20 ist über einen ersten Kippsteg 26 mit dem zweiten Teil der Wischleiste 18, dem Funktionsteil 22, verbunden. Nach der Erfindung wird der Funktionsteil 22 aus einem Stützabschnitt 30 und einem Wischkeil 32 mit angeformter Wischlippe 34 gebildet. Dabei schließt sich der Stützabschnitt 30 an den ersten Kippsteg 26 an und ist mit dem Wischkeil 32 durch einen zweiten Kippsteg 28 verbunden. Der Funktionsteil 22 weist zudem seine größte Breite von vorzugsweise 4 bis 6 mm auf der Seite zum ersten Kippsteg 26 auf, wobei die Breite des Stützabschnitts 30 und des Wischkeils 32 zum freien Ende der Wischlippe 34 hin kontinuierlich abnimmt. Ferner besitzt der Funktionsteil 22 zweckmäßigerweise eine Gesamthöhe von 4 bis 7 mm.

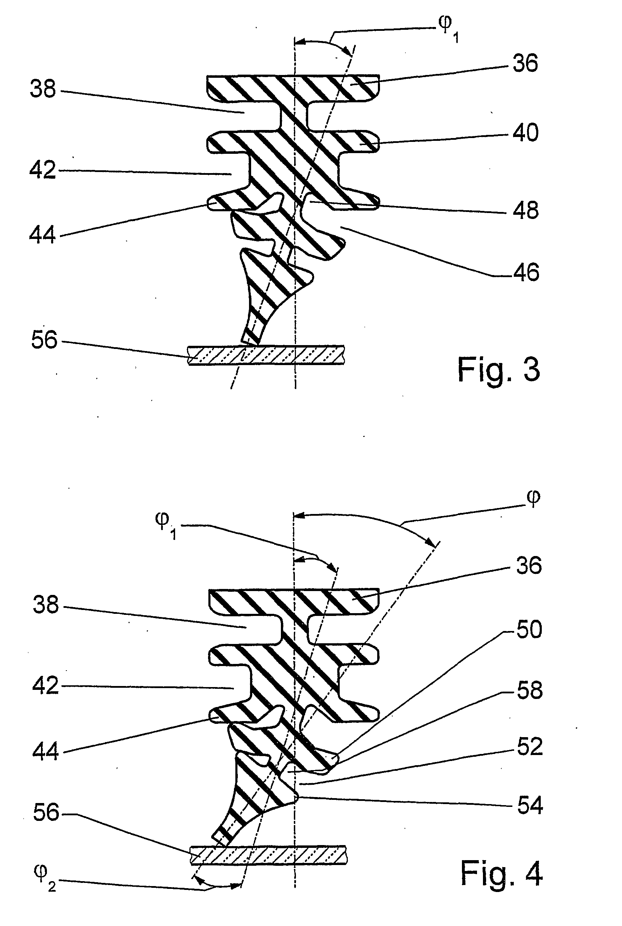

In Fig. 3 ist das Profil der Wischleiste 18 ohne Federschienen 24 ebenfalls vergrößert dargestellt. Ein Deckstreifen 36 begrenzt die einander gegenüberliegenden Längsnuten 38 für die Federschienen 24 auf der einen Seite. Auf der anderen Seite werden die Längsnuten 38 durch Zwischenstücke 40 begrenzt, welche gleichzeitig eine Seitenwand für weitere zwei Längsnuten 42 bilden, in denen die Krallen 16 der Krallenbügel 14 eingreifen. Die Längsnuten 42 sind auf der zur Fahrzeugscheibe 56 weisenden Seite durch weitere Deckstreifen 44 begrenzt, welche während des Betriebs des Scheibenwischers verhindern sollen, dass die Krallen 16 die Oberfläche der zu wischenden Fahrzeugscheibe 56 beschädigen. Die Maße der vorher beschriebenen Teile des Profilrückens 20 orientieren sich am Fahrzeugtyp und an der Dicke der Federschienen 24, so dass der Deckstreifen 36 0,5 bis 2 mm hoch ist, die Zwischenwände 40 zwischen den Längsnuten 38 und 42 eine Dicke von 0,6 bis 1,0 mm aufweisen und die Deckstreifen 44 zwischen den Längsnuten 42 und dem Funktionsteil 22 eine Dicke von 0,5 bis 1,0 mm besitzen.

Nach der Erfindung wird der erste Kippsteg 26, die Verbindung zwischen dem Profilrücken 20 und dem Funktionsteil 22, von zwei einander gegenüberliegenden, in Längsrichtung der Wischleiste 18 verlaufenden Freiräumen 46 gebildet und besitzt vorteilhafterweise eine Breite von 0,5 bis 1 mm und eine Höhe von 0,6 bis 1,4 mm. In der Zeichnung weist der Kippsteg 26 eine elastische Verformung auf, welche zu Beginn des Umklappvorgangs an den Umkehrpunkten der Schwenkbewegung auftritt. Dabei ist der Funktionsteil 22 um einen ersten Teilkippwinkel ϕ₁ zu einer Seite geneigt und eine ebenfalls auf dieser Seite liegende Schulter 50 an der Oberkante des trapezförmigen Stützabschnitts 30 stützt sich am Deckstreifen 44 ab. Das Maß des Teilkippwinkels ϕ₁ bzw. der Verformung des Kippstegs 26 wird durch die Höhe des Freiraums 46 bestimmt, die erfindungsgemäß 0,6 bis 1,4 mm beträgt. Um den ersten Kippsteg 26 jedoch so gering wie möglich elastisch zu verformen, erweitern sich die Freiräume 46 zum Profilrücken 20 hin im Bereich des ersten Kippstegs 26 durch Hinterschnitte 48, die eine Höhe von 0,4 bis 0,8 mm aufweisen.

Der zweite Kippsteg 28 wird ebenfalls von zwei einander gegenüberliegenden, sich in Längsrichtung der Wischleiste 18 erstreckenden Freiräumen 52 gebildet, die eine Höhe von 0,3 bis 0,8 mm und einen Abstand von 0,8 bis 1,5 mm von der Oberkante des Stützabschnitts 30 aufweisen. Der zweite Kippsteg 28 befindet sich in der Mitte des Funktionsteils 22 zwischen den Freiräumen 52 und weist die gleiche Höhe und eine Breite von 0,4 bis 1 mm auf.

In Fig. 4 ist der Funktionsteil 22 vollständig umgekippt und damit in der Endlage des Umklappvorgangs dargestellt. Hier stützt sich eine obere Schulter 54 des Wischkeils 32 an einer Unterkante des Stützabschnitts 30 ab. Ein für die Arbeitsstellung der Wischlippe 34 benötigter Kippwinkel ϕ zur Fahrzeugscheibe 56 wird demzufolge aus einem ersten Teilkippwinkel ϕ₁ und einem zweiten Teilkippwinkel ϕ₂ gebildet. Um ebenfalls eine möglichst geringe elastische Verformung des zweiten Kippstegs 28 zu erreichen, vergrößern Hinterschnitte 58 die Freiräume 52 im Bereich des zweiten Kippstegs 28 in der Höhe um 0,2 bis 0,4 mm.

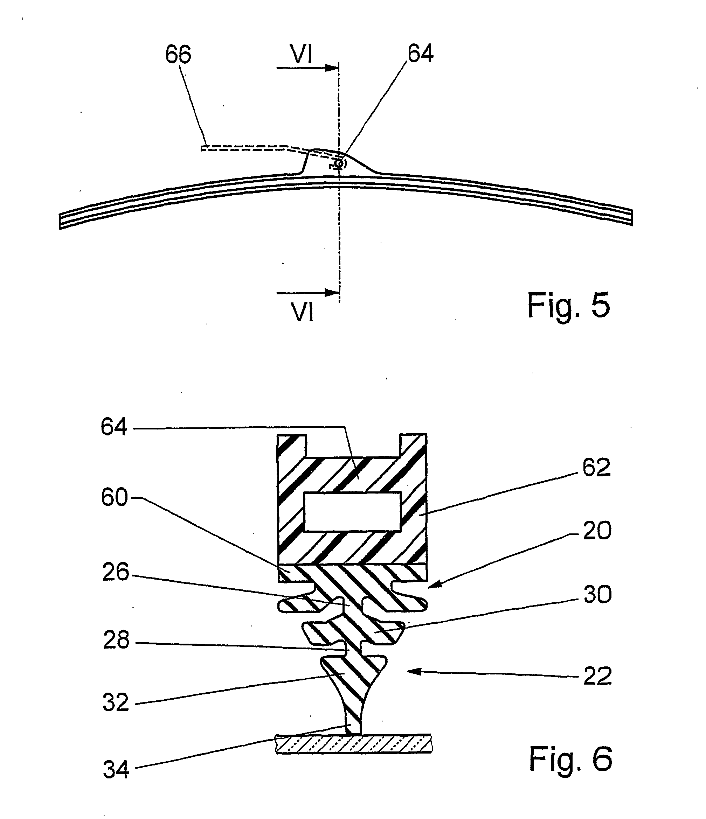

Bei der Ausführung nach Fig. 5 und Fig. 6 besitzt der Profilrücken 20 einen Deckstreifen 60, der an einem gelenklosen Träger 62 befestigt ist, z.B. durch Kleben, Vulkanisieren oder durch ein anderes geeignetes Verfahren. Der Träger 62 besteht aus einem elastischen Werkstoff, z.B. aus Metall oder einem Kunststoff, der zusätzlich durch Glasfasern oder Kohlenstofffasern verstärkt sein kann. Er besitzt eine Gelenkachse 64, die von einem hakenförmigen Ende oder einem Adapter einer Wischstange 66 umfasst wird. Der Träger 62 ist in Längsrichtung gekrümmt, so dass sich beim Anpressen an die Fahrzeugscheibe 56 ein über die Länge verteilter Anpressdruck ergibt.

## Patentansprüche

1. Wischleiste (18) für Scheibenwischer mit einem Profilrücken ( 20) und einem Funktionsteil (22), der über einen ersten Kippsteg (26) mit dem Profilrücken (20) verbunden ist und der sich in gekippter Position an ihm abstützt, wobei der Funktionsteil (22) einen Stützabschnitt (30) umfasst, der mit dem Profilrücken (20) über den ersten Kippsteg (26) und mit einem Wischkeil (32) über einen zweiten Kippsteg (28) verbunden ist, wobei die Verbindung zwischen dem Profilrücken (20) und dem Funktionsteil (52) von zwei einander gegenüberliegenden, in Längsrichtung der Wischleiste (18) verlaufenden Freiräumen (46) gebildet ist, **dadurch gekennzeichnet, daß** die Freiräumen (46) sich zum Profilrücken (20) hin im Bereich des ersten Kippsteg (26) durch Hinterschnitte (48) erweitern .

2. Wischleiste (18) nach Anspruch 1, **dadurch gekennzeichnet, dass** der erste Kippsteg (26) und der zweite Kippsteg (28) so aufeinander abgestimmt sind, dass bei einem Umklappvorgang des Funktionsteils (22) zunächst der erste Kippsteg (26) vollständig umklappt und der Stützabschnitt (30) sich am Profilrücken (20) abstützt, während der zweite Kippsteg (28) danach umklappt und der Wischkeil (32) des Funktionsteils (22) mit einer Schulter (50) am Stützabschnitt (30) zur Anlage kommt.

3. Wischleiste (18) nach einem der vorhergehenden Ansprüche, **dadurch gekennzeichnet, dass** der Profilrücken (20) eine Gesamtbreite von 6 bis 10 mm und eine Gesamthöhe von 3,5 bis 7 mm aufweist, wobei an den gegenüberliegenden Längsseiten Nuten (38) zur Aufnahme von Federschienen (24) vorgesehen sind, deren Dicke zwischen 0,7 und 1,2 mm und deren Breite zwischen 2,5 und 4,5 mm liegt.

4. Wischleiste (18) nach Anspruch 3, **dadurch gekennzeichnet, dass** der Profilrücken (20) nach oben durch einen Deckstreifen (36) begrenzt ist, der 0,5 bis 2 mm hoch ist, dass sich an die Längsnuten (38) zum Funktionsteil (22) hin weitere einander gegenüberliegende Längsnuten (42) anschließen, wobei Zwischenwände (40) zwischen den Längsnuten (38) und (42) eine Dicke von 0,6 bis 1 mm aufweisen und Deckstreifen (44) zwischen den Längsnuten (42) und dem Funktionsteil (22) eine Dicke von 0,5 bis 1 mm besitzen.

5. Wischleiste (18) nach einem der vorhergehenden Ansprüche, **dadurch gekennzeichnet, dass** der Funktionsteil (22) einschließlich des Stützabschnitts (30) seine größte Breite von vorzugsweise 4 bis 6 mm auf der Seite zum ersten Kippsteg (26) besitzt, wobei die Breite des Stützabschnitts (30), eines Wischkeils (32) und der Wischlippe (34) zum freien Ende der Wischlippe (34) hin kontinuierlich bis auf einen Wert von 0,5 bis 1 mm abnimmt.

6. Wischleiste (18) nach Anspruch 5, **dadurch gekennzeichnet, dass** der Funktionsteil (22) einschließlich des Stützabschnitts (30) eine Gesamthöhe von 4 bis 7 mm hat.

7. Wischleiste (18) nach einem der vorhergehenden Ansprüche, **dadurch gekennzeichnet, dass** der zweite Kippsteg (28) von zwei einander gegenüberliegenden, sich in Längsrichtung der Wischleiste (18) erstreckenden Freiräumen (52) gebildet ist, die eine Höhe von 0,3 bis 0,8 mm und einen Abstand von 0,8 bis 1,5 mm von der Oberkante des Stützabschnitts (30) aufweisen, dass zwischen den Freiräumen (52) in der Mitte des Funktionsteils (22) für den zweiten Kippsteg (28) ein Abstand von 0,4 bis 1 mm bleibt und dass die Höhe des zweiten Kippstegs (28) der Höhe der Freiräume (52) entspricht.

8. Wischleiste (18) nach Anspruch 7, **dadurch gekennzeichnet, dass** sich die Freiräume (52) im Bereich des zweiten Kippstegs (28) zum Stützabschnitt (30) hin durch einen Hinterschnitt (58) erweitern, der die Höhe der Freiräume (52) um 0,2 bis 0,4 mm vergrößert.

9. Wischleiste (18) nach einem der vorhergehenden Ansprüche, **dadurch gekennzeichnet, dass** der erste Kippsteg (26) von zwei einander gegenüberliegenden, in Längsrichtung der Wischleiste (18) verlaufenden Freiräumen (46) gebildet wird und eine Breite von 0,5 bis 1 mm und eine Höhe von 0,6 bis 1,4 mm aufweist, wobei die Freiräume (46) eine Höhe von 0,4 bis 0,8 mm aufweisen, die sich im Bereich des ersten Kippstegs (26) durch Hinterschnitte (48) zum Profilrücken (20) hin erweitern.

10. Wischleiste (18) nach einem der Ansprüche 1 oder 2 oder 5 bis 9, **dadurch gekennzeichnet, dass** der Profilrücken (20) mit einem Deckstreifen (60) an einem gelenklosen Träger (62) befestigt ist.

## Claims

1. Wiper strip (18) for windscreen wipers, having a profiled back (20) and a functional part (22), which is connected via a first tilting web (26) to the profiled back (20) and which is supported on it in the tilted position, the functional part (22) comprising a supporting section (30) which is connected to the profiled back (20) via the first tilting web (26) and to a wiping wedge (32) via a second tilting web (28), the connection between the profiled back (20) and the functional part (52) being formed by two mutually opposite clearances (46) running in the longitudinal direction of the wiper strip (18), **characterized in that** the clearances (46) are widened in the region of the first tilting web (26) towards the profiled back (20) by means of undercuts (48).

2. Wiper strip (18) according to Claim 1, **characterized in that** the first tilting web (26) and the second tilting web (28) are coordinated with each other in such a manner that, during a flipping-over process of the functional part (22), first of all the first tilting web (26) flips over completely and the supporting section (30) is supported on the profiled back (20), while the second tilting web (28) flips over afterwards and the wiping wedge (32) of the functional part (22) comes to rest with a shoulder (50) on the supporting section (30).

3. Wiper strip (18) according to one of the preceding claims, **characterized in that** the profiled back (20) has an overall width of 6 to 10 mm and an overall height of 3.5 to 7 mm, grooves (38) being provided on the opposite longitudinal sides in order to hold spring rails (24) whose thickness is between 0.7 and 1.2 mm and whose width is between 2.5 and 4.5 mm.

4. Wiper strip (18) according to Claim 3, **characterized in that** the profiled back (20) is bounded upwards by a covering strip (36) which is 0.5 to 2 mm high, **in that** further, mutually opposite longitudinal grooves (42) adjoin the longitudinal grooves (38) towards the functional part (22), intermediate walls (40) between the longitudinal grooves (38) and (42) having a thickness of 0.6 to 1 mm and the covering strips (44) between the longitudinal grooves (42) and the functional part (22) having a thickness of 0.5 to 1 mm.

5. Wiper strip (18) according to one of the preceding claims, **characterized in that** the functional part (22) including the supporting section (30) has its greatest width of preferably 4 to 6 mm on the side facing the first tilting web (26), the width of the supporting section (30), of a wiping wedge (32) and of the wiping lip (34) decreasing continuously towards the free end of the wiping lip (34) to a value of 0.5 to 1 mm.

6. Wiper strip (18) according to Claim 5, **characterized in that** the functional part (22) including the supporting section (30) has an overall height of 4 to 7 mm.

7. Wiper strip (18) according to one of the preceding claims, **characterized in that** the second tilting web (28) is formed by two mutually opposite clearances (52) which extend in the longitudinal direction of the wiper strip (18) and have a height of 0.3 to 0.8 mm and are at a distance of 0.8 to 1.5 mm from the upper edge of the supporting section (30), **in that** a distance of 0.4 to 1 mm remains between the clearances (52) in the centre of the functional part (22) for the second tilting web (28), and **in that** the height of the second tilting web (28) corresponds to the height of the clearances (52).

8. Wiper strip (18) according to Claim 7, **characterized in that** the clearances (52) are widened in the region of the second tilting web (28) towards the supporting section (30) by an undercut (58) which increases the height of the clearances (52) by 0.2 to 0.4 mm.

9. Wiper strip (18) according to one of the preceding claims, **characterized in that** the first tilting web (26) is formed by two mutually opposite clearances (46) running in the longitudinal direction of the wiper strip (18), and has a width of 0.5 to 1 mm and a height of 0.6 to 1.4 mm, the clearances (46) having a height of 0.4 to 0.8 mm and being widened in the region of the first tilting web (26) by means of undercuts (48) towards the profiled back (20).

10. Wiper strip (18) according to one of Claims 1 or 2 or 5 to 9, **characterized in that** the profiled back (20) is fastened to a hingeless support (62) by a covering strip (60).

## Revendications

1. Lame d'essuie-glace (18) avec un dos profilé (20) relié par une première nervure de basculement (26) à une partie fonctionnelle (22) qui s'appuie sur lui en position basculée, cette partie fonctionnelle (22) comprenant une section d'appui (30) reliée au dos profilé (20) par la première nervure de basculement (26) et à un coin d'essuyage (32) par une seconde nervure de basculement (28), la liaison entre le dos profilé (20) et la partie fonctionnelle (22) étant formée par deux espaces libres (46) disposés face à face et dans la direction longitudinale de la lame d'essuie-glace (18),
**caractérisée en ce que**
dans la zone de la première nervure de basculement (26) les espaces libres (46) s'agrandissent en direction du dos profilé (20), sous la forme de contre dépouilles (48).

2. Lame d'essuie-glace (18) selon la revendication 1,
**caractérisée en ce que**
la première nervure de basculement (26) et la seconde nervure de basculement (28) sont accordées l'une à l'autre pour que, quand la partie fonctionnelle (22) se rabat, la première nervure de basculement (26) se rabat d'abord complètement de sorte que la section d'appui (30) vient s'appliquer sur le dos profilé (20), puis la seconde nervure de basculement (28) se rabat et le coin d'essuie-glace (32) de la partie fonctionnelle (22) vient s'appliquer sur la section d'appui (30) par un épaulement (54).

3. Lame d'essuie-glace (18) selon la revendication 1 ou 2,
**caractérisée en ce que**
le dos profilé (20) a une largeur totale de 6 à 10 mm et une hauteur totale de 3,5 à 7 mm et sur les côtés longitudinaux opposés des rainures (38) sont prévues pour accueillir des rails élastiques (24), ces rainures ayant une épaisseur comprise entre 0,7 et 1,2 mm et une largeur comprise entre 2,5 et 4,5 mm.

4. Lame d'essuie-glace (18) selon la revendication 3,
**caractérisée en ce que**
le dos profilé (20) est délimité vers le haut par une bande de couverture (36), présentant une hauteur comprise entre 0,5 et 2 mm, des rainures longitudinales (42) opposées l'une à l'autre se raccordant aux rainures longitudinales (38) en direction de la partie fonctionnelle (22) avec entre les rainures longitudinales (38) et (42) des parois intermédiaires (40) d'une épaisseur allant de 0,6 à 1 mm, tandis que les bandes de couverture (44) entre les rainures longitudinales (42) et la partie fonctionnelle (22) présentent une épaisseur allant de 0,5 à 1 mm.

5. Lame d'essuie-glace (18) selon une des revendications précédentes,
**caractérisée en ce que**
la partie fonctionnelle (22), y compris la section d'appui (30) présente sa plus grande largeur, allant de préférence de 4 à 6 mm, du côté situé vers la première nervure de basculement (26), la largeur de la section d'appui (30), du coin d'essuyage (32) et de la lèvre d'essuyage (34) allant en diminuant en direction de l'extrémité libre de cette lèvre (34), en continu pour atteindre une valeur de 0,5 à 1 mm.

6. Lame d'essuie-glace (18) selon la revendication 5,
**caractérisée en ce que**
la partie fonctionnelle (22), y compris la section d'appui (30), a une hauteur totale de 4 à 7 mm.

7. Lame d'essuie-glace (18) selon une des revendications précédentes,
**caractérisée en ce que**
la seconde nervure de basculement (28) est formée par deux espaces libres (32) s'étendant selon la direction longitudinale de l'essuie-glace (18), présentant une hauteur de 0,3 à 0,8 mm, et situés à une distance de 0,8 à 1,5 mm du bord supérieur de la section d'appui (30), une distance de 0,4 à 1 mm subsistant entre les espaces libres (52) au milieu de la partie fonctionnelle (22) pour la seconde nervure de basculement (28), dont la hauteur correspond à celle des espaces libres (52).

8. Lame d'essuie-glace (18) selon la revendication 7,
**caractérisée en ce que**
les espaces libres (52), dans la zone de la seconde nervure de basculement (28), s'agrandissent chacun en direction de la section d'appui (30) sous la forme d'une contredépouille (58) qui augmente la hauteur des espaces libres (52) de 0,2 à 0,4 mm.

9. Lame d'essuie-glace (18) selon une des revendications précédentes,
**caractérisée en ce que**
la première nervure de basculement (26) est formée par deux espaces libres (46) se faisant face et disposés en direction longitudinale du balai d'essuie-glace (18), cette nervure présentant une largeur de 0,5 à 1 mm et une hauteur de 0,6 à 1,4 mm, tandis que les espaces libres (46) ont une hauteur de 0,4 à 0,8 mm qui s'accroît dans la zone de la première nervure de basculement (26) sous la forme de contredépouilles (48) en direction du dos profilé (20).

10. Lame d'essuie-glace (18) selon une des revendications 1 ou 2, ou 5 à 9,
**caractérisée en ce que**
le dos profilé (20) est fixé par une bande de couverture (60) sur un support (62) non articulé.
